(19) Europäisches Patentamt
European Patent Office
Office européen des brevets

(11) EP 0 376 364 B1

(12) EUROPEAN PATENT SPECIFICATION

(45) Date of publication and mention of the grant of the patent:
**06.03.1996 Bulletin 1996/10**

(51) Int Cl.$^6$: **C08G 67/02**

(21) Application number: **89202994.3**

(22) Date of filing: **23.11.1989**

# (54) Polymers of carbon monoxide with one or more alpha-olefins

Polymere von Carbonmonoxid mit einem oder mehreren Alphaolefinen

Polymères du monoxyde de carbone avec une ou plusieurs alphaoléfines

(84) Designated Contracting States:
**AT BE CH DE ES FR GB GR IT LI LU NL SE**

(30) Priority: **28.11.1988 NL 8802923**

(43) Date of publication of application:
**04.07.1990 Bulletin 1990/27**

(73) Proprietor: **SHELL INTERNATIONALE RESEARCH MAATSCHAPPIJ B.V.**
**NL-2596 HR Den Haag (NL)**

(72) Inventors:
- **Van Doorn, Johannes Adrianus**
  **NL-1031 CM Amsterdam (NL)**
- **Wong, Pui Kwan**
  **NL-1031 CM Amsterdam (NL)**
- **Sudmeier, Olof**
  **NL-1031 CM Amsterdam (NL)**

(56) References cited:
**EP-A- 121 965** **EP-A- 181 014**
**EP-A- 0 235 865** **EP-A- 0 314 309**
**GB-A- 1 362 908**

- **Macromolecules 1992, 25, p. 3604-3606**

Remarks:
The file contains technical information submitted after the application was filed and not included in this specification

EP 0 376 364 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to novel polymers of carbon monoxide with one or more alpha-olefins.

Linear polymers of carbon monoxide with ethene, in which polymers the units originating in carbon monoxide on the one hand, and the units originating in ethene on the other hand, occur in alternating order, can be prepared by contacting the monomers at an elevated temperature and pressure with a solution of a catalyst composition in a diluent, which catalyst composition is based upon:

a) a palladium compound,
b) an anion of an acid with a pKa of less than 2, and
c) a diphosphine of the general formula $R^1R^2P\text{-}R\text{-}PR^3R^4$, wherein $R^1$, $R^2$, $R^3$ and $R^4$ are the same or different optionally polar-substituted aromatic hydrocarbyl groups and R is a bivalent organic bridging group containing at least two carbon atoms in the bridge.

In the afore-mentioned copolymerization, the catalyst compositions display a high degree of polymerizing activity. The alternating carbon monoxide/ethene copolymers have a disadvantage in that they have very high melting points. The processing of these polymers should be conducted in the molten state, with the material being at a temperature at least 25°C above the melting point. It has been found that these polymers are not very capable of withstanding the high temperatures required for their processing, which may result in discolouring and decomposition. During research carried out earlier by the Applicant it has been found that the melting points of these polymers can be considerably reduced by including in the monomer mixture from which they are prepared a relatively snall amount of one or more alpha-olefins having at least three carbon atoms in the molecule (for the sake of brevity referred to as $C_{3+}$ alpha-olefins). According as more of these $C_{3+}$ alpha-olefins are included in the monomer mixture, the polymers obtained have lower melting points. The investigation has further shown that the afore-mentioned catalyst compositions which displayed a high level of polymerizing activity during the copolymerization of carbon monoxide with ethene, also display a high level of polymerizing activity in the polymerization of carbon monoxide with ethene and with one or more $C_{3+}$ alpha-olefins.

The Applicant recently carried out an investigation into whether the afore-mentioned catalyst compositions can be employed to prepare linear polymers of carbon monoxide with one or more $C_{3+}$ alpha-olefins in which the units originating in carbon monoxide or the one hand, and the units originating in the $C_{3+}$ alpha-olefins used on the other hand, occur in alternating order. It has been found that such polymers can indeed be prepared in this way, but with the catalyst compositions displaying only poor polymerizing activity in comparison with the activity that was observed during the polymerization of carbon monoxide with ethene and optionally one or more $C_{3+}$ alpha-olefins. The polymers thus prepared are regio-irregular. The term regio-irregular refers to the way in which the units originating in a $C_{3+}$ alpha-olefin are attached to a unit originating in carbon monoxide within the polymer chains. Here, three cases are to be distinguished, which can be referred to as: "head/head", "tail/tail" and "head/tail". If the applied $C_{3+}$ alpha-olefin is given by the formula $CH_2\text{=}CH\text{-}R^5$, in which $R^5$ represents an alkyl group, these three cases may be schematically represented as

head/head: $-(CH_2)-(CHR^5)-(CO)-(CHR^5)-(CH_2)-$
tail/tail: $-(CHR^5)-(CH_2)-(CO)-(CH_2)-(CHR^5)-$
head/tail: $-(CH_2)-(CHR^5)-(CO)-(CH_2)-(CHR^5)-$.

The afore-mentioned polymerization of carbon monoxide with a $C_{3+}$ alpha-olefin affords polymers in which the above configurations are present in a ratio of about 1:1:2, i.e. the units originating in the $C_{3+}$ alpha-olefins are attached in a head/tail fashion to about 50% of the units originating in carbon monoxide. Such polymers are referred to as regio-irregular.

Continued research by the Applicant into this subject has now shown that the afore-mentioned catalyst compositions' level of activity for polymerizing carbon monoxide with one or more $C_{3+}$ alpha-olefins can be much enhanced when the diphosphine of the general formula $R^1R^2P\text{-}R\text{-}PR^3R^4$ mentioned as component c) is replaced with a diphosphine of the general formula $R^6R^7P\text{-}R\text{-}PR^8R^9$ in which $R^6$, $R^7$, $R^8$ and $R^9$ represent the same or different optionally polar-substituted aliphatic hydrocarbyl groups and R has the meaning given hereinbefore. Further, it has been found that the catalyst compositions which include a diphosphine of the general formula $R^6R^7P\text{-}R\text{-}PR^8R^9$ as component c) are also excellently suited for the preparation of polymers of carbon monoxide with one or more $C_{3+}$ alpha-olefins and also with ethene.

During the research it was surprisingly found that with regard to the way in which the units originating in the $C_{3+}$ alpha-olefins occur on either side of a unit originating in carbon monoxide, the polymers thus prepared differ strongly from the regio-irregular polymers mentioned earlier. It was found that in the polymers prepared by using a catalyst composition which includes a diphosphine of the general formula $R^6R^7P\text{-}R\text{-}PR^8R^9$ as component c), the units originating in the $C_{3+}$ alpha-olefins are attached in a head/tail fashion to more than 50% of the units originating in carbon monoxide and carrying on either side a unit originating in the $C_{3+}$ alpha-olefins. Such polymers are referred to as regio-regular.

The afore-mentioned percentage of more than 50% refers only to the units originating in carbon monoxide which carry a unit originating in a $C_{3+}$ alpha-olefin on either side. Naturally, units originating in carbon monoxide and carrying on one or both sides a unit originating in ethene are not included in the determination of this percentage.

During the research it was further surprisingly found that in the polymers of carbon monoxide with a $C_{3+}$ alpha-olefin prepared by using a catalyst composition which includes a diphosphine of the general formula $R^6R^7P\text{-}R\text{-}PR^8R^9$ as component c), the units originating in carbon monoxide occur in two different structures, viz. in the ketone structure and in the spiroketal structure. This contrasts with, for instance, polymers of carbon monoxide with ethene prepared by using a catalyst composition which includes a diphosphine of the general formula $R^1R^2P\text{-}R\text{-}PR^3R^4$ as component c), in which polymers the units originating in carbon monoxide occur exclusively in the ketone structure. The difference between the ketone structure and the spiroketal structure may be illustrated as follows. If polymers of carbon monoxide with an alpha-olefin $R^5\text{-}CH{=}CH_2$ include units originating in carbon monoxide which have a ketone structure, they will be present in the polymer molecules as indicated by the schematic representation following

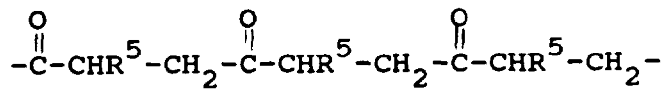

i.e. the carbon atoms of these units are interconnected through a bridge made up of the alpha- and beta-carbon atom of the alpha-olefin used. If polymers of carbon monoxide with an alpha-olefin $R^5\text{-}CH{=}CH_2$ include units originating in carbon monoxide which have a spiroketal structure, they will be present in the polymer molecules as indicated by the schematic representation following

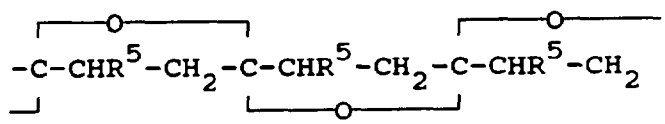

i.e. the carbon atoms of these units are connected not only through the afore-mentioned bridge made up of the alpha- and beta-carbon atom of the alpha-olefin used, but also through an oxygen atom of either one of the units originating in carbon monoxide. Thus, if units originating in carbon monoxide occur in the spiroketal structure, the polymer holds a plurality of alkyl-substituted tetrahydrofuran rings which are interlinked through spiro-carbon atoms.

The spiroketal structure is the less stable of the two structures. When the polymers are subjected to $^{13}C$-NMR analysis in the solid state, as obtained from the process of the invention, it is seen that part of the units originating in carbon monoxide is present in the spiroketal structure and the remainder in the ketone structure. After dissolution of these polymers in hexafluoroisopropanol and $^{13}C$-NMR analysis of the solution, it is seen that the spiroketal structure has disappeared and all of the polymer has assumed a polyketone structure. Likewise, after separation of the polymers from the hexafluoroisopropanol solution and $^{13}C$-NMR analysis of the polymers in the solid state, the polyketone structure is the only structure observed. The spiroketal structures present in the polymers may also be converted into ketone structures by heating the polymers for some time.

The present patent application relates to novel polymers of carbon monoxide with one or more alpha-olefins having at least three carbon atoms in the molecule, and optionally with ethene,
characterized in that

a) the polymers have a linear structure,
b) in the polymers the units originating in carbon monoxide on the one hand and the units originating in the olefins used on the other hand occur in alternating order,
c) in the polymers the units originating in an alpha-olefin with at least three carbon atoms in the molecule are attached in a head/tail fashion to more than 75% of the units originating in carbon monoxide and carrying on either side a unit originating in an alpha-olefin with at least three carbon atoms in the molecule, and
d) the units originating in carbon monoxide are present in a ketone structure.

The present patent application also relates to polymers of carbon monoxide with one or more alpha-olefins having at least three carbon atoms in the molecule, and optionally with ethene,
characterized in that

a) the polymers have a linear structure,
b) in the polymers the units originating in carbon monoxide on the one hand and the units originating in the olefins used on the other hand occur in alternating order,
c) in the polymers the units originating in an alpha-olefin with at least three carbon atoms in the molecule are attached in a head/tail fashion to more than 75% of the units originating in carbon monoxide and carrying on either side a

unit originating in an alpha-olefin with at least three carbon atoms in the molecule, and

d) the polymers are obtainable from a precursor polymer based on the same monomers and having the same characteristics a), b) and c), in which precursor polymer at least part of the units originating in carbon monoxide has the spiroketal structure, by dissolving the precursor polymer in hexafluoroisopropanol.

The present patent application further relates to a process for the preparation of such polymers which comprises subjecting a precursor polymer as defined hereinbefore to a treatment in which spiroketal structures are converted into ketone structures which treatment comprises heating the precursor copolymer or comprises dissolving the precursor copolymer in hexafluoroisopropanol.

In the polymers of the invention, the units originating in the $C_{3+}$ alpha-olefins are attached in a head/tail fashion to more than 75% of the units originating in carbon monoxide and carrying a unit originating in the $C_{3+}$ alpha-olefins on either side. Preference is given to polymers in which this percentage is more than 90. As regards the monomers of the polymers of the invention, it is preferred that they are based on $C_{3+}$ alpha-olefins with at most 10 carbon atoms in the molecule. Preference is further given to copolymers of carbon monoxide with only a single $C_{3+}$ alpha-olefin, such as propene, pentene-1 or 4-methyl-pentene-1 and in particular to copolymers of carbon monoxide with propene.

The precursor polymers may be prepared by contacting the monomers with a solution of a catalyst composition in a diluent, which catalyst composition is based upon:

a) a palladium compound,

b) an anion of an acid with a pKa of less than 2, and

c) a diphosphine of the general formula $R^6R^7P$-R-$PR^8R^9$, in which $R^6$, $R^7$, $R^8$ and $R^9$ represent the same or different optionally polar-substituted aliphatic hydrocarbyl groups and R is a bivalent organic bridging group containing at least two carbon atoms in the bridge.

The preparation of the precursor polymers is preferably carried out at a temperature of from 20 to 100 °c, an overall pressure of from 5 to 150 bar and by employing such a quantity of catalyst composition as to contain $10^{-7}$ to $10^{-3}$ mol of palladium per mol of olefin to be polymerized. Special preference is given to a preparation carried out at a temperature in the range of from 30 to 85°C, an overall pressure in the range of from 20 to 100 bar and by employing such a quantity of catalyst composition as to contain $10^{-6}$ to $10^{-4}$ mol of palladium per mol of olefin to be polymerized. The molar ratio in the mixture to be polymerized of the olefins relative to carbon monoxide is preferably from 10:1 to 1:10 and in particular from 5:1 to 1:5. Very suitable diluents are lower aliphatic alcohols, such as methanol and mixtures thereof with cyclic ethers, such as tetrahydrofuran.

The palladium compound employed in the catalyst compositions as component a) is preferably a palladium salt of a carboxylic acid, and palladium acetate in particular. Examples of suitable acids with a pKa of less than 2 (determined in aqueous solution at 18°C) are mineral acids, such as perchloric acid, sulphonic acids, such as para-toluenesulphonic acid, and halogen carboxylic acids, such as trifluoroacetic acid. In the catalyst compositions, component b) is preferably taken up in the form of an acid and/or in the form of a salt. A very suitable acid is trifluoroacetic acid and a very suitable salt is nickel perchlorate. Preferably, the quantity of component b) present in the catalyst compositions is from 0.5 to 50 and in particular from 1 to 25 mol per mol of palladium.

In the diphosphines of the general formula $R^6R^7P$-R-$PR^8R^9$ that are eligible to be used as component c) in the catalyst compositions, groups $R^6$, $R^7$, $R^8$ ard $R^9$ each preferably contain no more than 10 carbon atoms. Optionally, groups $R^6$ and $R^7$ on the one hand, and $R^8$ and $R^9$ on the other hand may be connected to one another through a carbon-carbon bond, so that together with the phosphorus atom to which they are bound, they form a heterocyclic phosphorus-containing group. Preferably, groups $R^6$, $R^7$, $R^8$ and $R^9$ are the same alkyl groups. As regards the bridging group R present in the diphosphines, preference is given to bridging groups containing three atoms in the bridge, at least two of which are carbon atoms. Examples of suitable bridging groups R are the $-CH_2-CH_2-CH_2-$ group, the $-CH_2-C(CH_3)_2-CH_2-$ group and the $-CH_2-Si(CH_3)_2-CH_2-$ group. A diphosphine that can be very suitably used as component c) in the present catalyst compositions is 1,3-bis(di-n-butylphosphino)propane. Preferably, the diphosphines are used in the catalyst composition in a quantity of from 0.5 to 2 and in particular of from 0.75 to 1.5 mol per mol of palladium.

It is preferred that a 1,4-quinone be included as component d) in the present catalyst compositions that are used in the preparation of the polymers of the invention. For this purpose, 1,4-benzoquinones and 1,4-naphthoquinones are very suitable. The quantity of 1,4-quinone used preferably lies in a range of from 1 to 5000 mol and in particular in a range of from 5 to 1000 mol per mol of palladium.

The invention will now be illustrated with the aid of the following Examples, of which Examples 1 to 7 are in accordance with the invention.

Example 1

A carbon monoxide/propene copolymer was prepared as follows. A mechanically stirred autoclave with a capacity of 300 ml was charged with 110 ml of tetrahydrofuran and 80 ml of propene. After the contents of the autoclave had been brought to 42°C, carbon monoxide was blown in until a pressure of 40 bar was reached. Subsequently, a catalyst solution was introduced into the autoclave, which comprised

8.5 ml methanol,
21.5 ml tetrahydrofuran,
0.043 mmol palladium acetate,
0.21 mmol nickel perchlorate,
0.052 mmol 1,3-bis(di-n-butylphosphino)propane, and
3.0 mmol 1,4-naphthoquinone.

Polymerization was terminated after 64.5 hours by cooling the reaction mixture to room temperature and releasing the pressure. The reaction mixture was stirred into methanol and the copolymer was filtered off, washed with methanol and dried at 50°C.

63 g of copolymer was obtained. The polymerization rate was 214 g copolymer/g palladium.hour.

Example 2

A carbon monoxide/propene copolymer was prepared substantially in the same way as in Example 1, except for the following differences

a) 87 ml instead of 80 ml of propene was introduced into the autoclave,
b) the catalyst solution used comprised
8.5 ml methanol,
21.5 ml tetrahydrofuran,
0.052 mmol palladium acetate,
0.264 mmol nickel perchlorate, and
0.063 mmol 1,3-bis(di-n-butylphosphino)propane, and
c) the reaction time was 140 hours instead of 64.5 hours.

11.5 g copolymer was obtained. The polymerization rate was 15 g copolymer/g palladium.hour.

Example 3

A carbon monoxide/propene copolymer was prepared substantially in the same way as in Example 1, except for the following differences

a) the reaction temperature was 73°C instead of 42°C, and
b) the reaction time was 2.33 hours instead of 64.5 hours.

15.63 g copolymer was obtained. The polymerization rate was 1470 g copolymer/g palladium.hour.

Example 4

A carbon monoxide/propene copolymer was prepared substantially in the same way as in Example 1, except for the following differences

a) 110 ml of methanol and 91 ml of propene instead of 110 ml of tetrahydrofuran and 80 ml of propene were introduced into the autoclave,
b) the catalyst solution used comprised
6 ml methanol,
0.012 mmol palladium acetate,
0.062 mmol nickel perchlorate, and
0.014 mmol 1,3-bis(di-n-butylphosphino)propane, and
3 mmol 1,4-naphthoquinone, and

c) the reaction time was 67.05 hours instead of 64.5 hours.

33.32 g copolymer was obtained. The polymerization rate was 388 g copolymer/g palladium.hour.

Example 5

A carbon monoxide/propene copolymer was prepared substantially in the same way as in Example 1, except for the following differences

a) 110 ml of methanol instead of tetrahydrofuran was introduced into the autoclave,
b) the catalyst solution used comprised
30 ml methanol,
0.043 mmol palladium acetate,
0.902 mmol trifluoro acetic acid,
0.055 mmol 1,3-bis(di n-butylphosphino)propane, and
3 mmol 1,4-naphthoquinone, and
c) the reaction time was 68.5 hours instead of 64.5 hours.

38 g copolymer was obtained. The polymerization rate was 121 g copolymer/g palladium.hour.

Example 6

A carbon monoxide/pentene-1 copolymer was prepared as follows. A mechanically stirred autoclave with a capacity of 300 ml which contained 60 ml pentene-1, was charged with a catalyst solution comprising
11 ml methanol,
118 ml tetrahydrofuran
0.061 mmol palladium acetate,
0.308 mmol nickel perchlorate, and
0.074 mmol 1,3-bis(di-n-butylphosphino)propane, and
3.2 mmol 1,4-naphthoquinone.

After carbon monoxide had been blown into the autoclave until a pressure of 40 bar was reached, the contents of the autoclave were brought to 40°C. Polymerization was terminated after 60 hours by cooling the reaction mixture to room temperature and releasing the pressure. The reaction mixture was stirred into methanol and the copolymer was filtered off, washed with methanol and dried at 50°C.

11.4 g of copolymer was obtained. The polymerization rate was 29.2 g copolymer/g palladium.hour.

Example 7

A carbon monoxide/4-methylpentene-1 copolymer was prepared substantially in the same way as the carbon monoxide/pentene-1 copolymer of Example 6, except for the following differences

a) the autoclave contained 25 ml of 4-methylpentene-1 instead of 60 ml of pentene-1, and
b) the reaction time was 40 hours instead of 60 hours.

13.1 g copolymer was obtained. The polymerization rate was 50 g copolymer/g palladium.hour.

Example 8

A carbon monoxide/propene copolymer was prepared substantially in the same way as in Example 1, except for the following differences

a) 130 ml instead of 110 ml of tetrahydrofuran and 75 ml instead of 80 ml of propene were introduced into the autoclave,
b) the catalyst solution used comprised
27 ml methanol,
9 ml toluene,
0.06 mmol palladium acetate,
0.426 mmol nickel perchlorate,

0.072 mmol 1,3-bis[bis(2-methoxyphenyl)phosphino]propane, and
3.0 mmol 1,4-naphthoquinone, and
c) the reaction time was 67.28 hours instead of 64.5 hours.

9.9 g copolymer was obtained. The polymerization rate was 23 g copolymer/g palladium.hour.

In Examples 1-7, catalyst compositions containing a diphosphine of the general formula $R^6R^7P$-R-$PR^8R^9$ as component c) were employed to prepare copolymers of carbon monoxide with a $C_{3+}$ alpha-olefin, of which copolymers it was established, after dissolution in hexafluoroisopropanol and analysis with the aid of $^{13}C$-NMR, that

a) they had a linear structure,
b) the units originating in carbon monoxide and the units originating in the $C_{3+}$ alpha-olefin used occurred in alternating order,
c) the units originating in the $C_{3+}$ alpha-olefin were attached to more than 90% of the units originating in carbon monoxide in a head/tail fashion, and
d) the units originating in carbon monoxide were present in a ketone structure.

Example 8 falls outside the scope of the invention and has been included herein for comparison. According to this Example, a catalyst composition which included a diphosphine of the general formula $R^1R^2P$-R-$PR^3R^4$ was employed to prepare a carbon monoxide/propene copolymer, of which copolymer it was established, after dissolution in hexafluoroisopropanol and after analysis with the aid of $^{13}C$-NMR that, like the copolymers prepared according to Examples 1-7, they had a linear, alternating structure and that the units originating in carbon monoxide were present in a ketone structure, but that the units originating in propene were attached in a head/tail fashion to just about 50% of the units originating in carbon monoxide.

The favourable effect on polymerization rates which is produced during the polymerization of carbon monoxide with a $C_{3+}$ alpha-olefin, when a diphosphine of the general formula $R^1R^2P$-R-$PR^3R^4$ is replaced with a diphosphine of the general formula $R^6R^7P$-R-$PR^8R^9$, is clearly demonstrated by the comparison of the polymerization rates obtained in Examples 8 (23 g copolymer/g palladium.hour) and 1 (214 g copolymer/g palladium.hour), which were both carried out at the same temperature.

Besides being subjected to the afore-mentioned $^{13}C$-NMR analysis in a hexafluoroisopropanol solution, each one of the polymers prepared according to Examples 1-7 was subjected to $^{13}C$-NMR analysis in the solid state, as obtained after separation from the reaction mixture. Thus it was established what percentage of units originating in carbon monoxide was present in the polymers in the ketone structure and what percentage in the spiroketal structure. In addition, the intrinsic viscosity of the prepared polymers in meta-cresol at 60°C (referred to as LVN 60) and/or the average degree of polymerization on the basis of terminal group analysis (referred to as $\overline{DP}$ ) were determined. These are both quantities that give an impression of the average molecular weight of the polymers, in that polymers with higher average molecular weights, display both higher LVN 60s and higher $\overline{DP}$ s. The results are given in the table following. (The polymer prepared according to Example 8 had a $\overline{DP}$ of 185).

TABLE

| Polymer prepared according to Example | 1 | 2 | 3 | 4 | 5 | 6 | 7 |
|---|---|---|---|---|---|---|---|
| Units originating in carbon monoxide with spiroketal structure, % | 25 | 75 | 10 | 10 | 30 | 75 | 75 |
| Units originating in carbon monoxide with ketone structure, % | 75 | 25 | 90 | 90 | 70 | 25 | 25 |
| LVN 60, dl/g | 0.77 | 1.0 | 0.14 | 0.45 | 0.51 | - | - |
| $\overline{DP}$ | 490 | 740 | - | - | - | 34 | 56 |

## Claims

**1.** Polymers of carbon monoxide with one or more alpha-olefins having at least three carbon atoms in the molecule, and optionally with ethene, characterized in that

a) the polymers have a linear structure,
b) in the polymers the units originating in carbon monoxide on the one hand and the units originating in the olefins used on the other hand occur in alternating order,

c) in the polymers the units originating in an alpha-olefin with at least three carbon atoms in the molecule are attached in a head/tail fashion to more than 75% of the units originating in carbon monoxide and carrying on either side a unit originating in an alpha-olefin with at least three carbon atoms in the molecule, and
d) the units originating in carbon monoxide are present in a ketone structure.

**2.** Polymers of carbon monoxide with one or more alpha-olefins having at least three carbon atoms in the molecule, and optionally with ethene, characterized in that

a) the polymers have a linear structure,
b) in the polymers the units originating in carbon monoxide on the one hand and the units originating in the olefins used on the other hand occur in alternating order,
c) in the polymers the units originating in an alpha-olefin with at least three carbon atoms in the molecule are attached in a head/tail fashion to more than 75% of the units originating in carbon monoxide and carrying on either side a unit originating in an alpha-olefin with at least three carbon atoms in the molecule, and
d) the polymers are obtainable from a precursor polymer based on the same monomers and having the same characteristics a), b) and c), in which precursor polymer at least part of the units originating in carbon monoxide has the spiroketal structure, by dissolving the precursor polymer in hexafluoroisopropanol.

**3.** Polymers as claimed in claim 1 or 2, characterized in that in these polymers, to more than 90% of the units originating in carbon monoxide and carrying on either side a unit originating in an alpha-olefin having at least three carbon atoms in the molecule, the latter units are attached in a head/tail fashion.

**4.** Process for the preparation of polymers, characterized in that a precursor polymer as defined in claim 2 is subjected to a treatment in which spiroketal structures are converted into ketone structures, which treatment comprises heating the precursor polymer, or comprises dissolving the precursor copolymer in hexafluoroisopropanol.

**5.** Process as claimed in claim 4 characterized in that the process includes a polymerization process for the preparation of the precursor polymer in which polymerization process the monomers are contacted with a solution of a catalyst composition in a diluent, which catalyst composition is based upon

a) a palladium compound,
b) an anion of an acid with a pKa of less than 2, and
c) a diphosphine of the general formula $R^6R^7P\text{-}R\text{-}PR^8R^9$, in which $R^6$, $R^7$, $R^8$ and $R^9$ represent the same or different optionally polarsubstituted aliphatic hydrocarbyl groups and R is a bivalent organic bridging group containing at least two carbon atoms in the bridge.

**6.** Process as claimed in claim 5, characterized in that the polymerization process is carried out at a temperature in the range of from 20 to 100 °C, an overall pressure in the range of from 5 to 150 bar, a molar ratio of the olefins relative to carbon monoxide in the mixture to be polymerized in the range of from 10:1 to 1:10, and by using such a quantity of catalyst composition as to contain $10^{-7}$ to $10^{-3}$ mol of palladium per mol of olefin to be polymerized.

**7.** Process as claimed in claim 5 or 6, characterized in that a catalyst composition is employed which includes 0.5 to 50 mol of component b) and 0.5 to 2 mol of component c) per mol of palladium.

**8.** Process as claimed in one or more of claims 5-7, characterized in that a catalyst composition is employed which includes as component c) a diphosphine in which each of the groups $R^6$, $R^7$, $R^8$ and $R^9$ contains not more than 10 carbon atoms.

**9.** Process as claimed in claim 8, characterized in that a catalyst composition is employed which includes as component c) a diphosphine in which the groups $R^6$, $R^7$, $R^8$ and $R^9$ are the same alkyl groups and in which the bridging group R has three atoms in the bridge at least two of which are carbon atoms, such as 1,3-bis(di-n-butylphosphino)propane.

**10.** Process as claimed in one or more of claims 5-9, characterized in that a catalyst composition is employed which in addition includes a 1,4-quinone as component d), in a quantity of from 1 to 5000 mol per mol of palladium.

**Patentansprüche**

1. Polymerisate aus Kohlenmonoxid mit einem oder mehreren alpha-Olefinen mit mindestens 3 Kohlenstoffatomen im Molekül sowie gegebenenfalls Ethen, dadurch gekennzeichnet, daß

   a) die Polymerisate eine lineare Struktur aufweisen,
   b) in den Polymerisaten die aus Kohlenmonoxid stammenden Einheiten einerseits und die aus den eingesetzten Olefinen stammenden Einheiten andererseits in alternierender Reihenfolge vorliegen,
   c) in den Polymerisaten die aus einem alpha-Olefin mit mindestens 3 Kohlenstoffatomen im Molekül stammenden Einheiten mit den aus Kohlenmonoxid stammenden Einheiten, die auf beiden Seiten eine aus einem alpha-Olefin mit mindestens 3 Kohlenstoffatomen im Molekül stammende Einheit tragen, zu mehr als 75% auf Kopf-Schwanz-Art verknüpft sind und
   d) die aus Kohlenmonoxid stammenden Einheiten in einer Ketonstruktur vorliegen.

2. Polymerisate aus Kohlenmonoxid mit einem oder mehreren alpha-Olefinen mit mindestens 3 Kohlenstoffatomen im Molekül sowie gegebenenfalls Ethen, dadurch gekennzeichnet, daß

   a) die Polymerisate eine lineare Struktur aufweisen,
   b) in den Polymerisaten die aus Kohlenmonoxid stammenden Einheiten einerseits und die aus den eingesetzten Olefinen stammenden Einheiten andererseits in alternierender Reihenfolge vorliegen,
   c) in den Polymerisaten die aus einem alpha-Olefin mit mindestens 3 Kohlenstoffatomen im Molekül stammenden Einheiten mit den aus Kohlenmonoxid stammenden Einheiten, die auf beiden Seiten eine aus einem alpha-Olefin mit mindestens 3 Kohlenstoffatomen im Molekül stammende Einheit tragen, zu mehr als 75% auf Kopf-Schwanz-Art verknüpft sind und
   d) die Polymerisate aus einem auf den gleichen Monomeren basierenden Vorläuferpolymerisat mit den gleichen Eigenschaften a), b) und c), in welchem die aus Kohlenmonoxid stammenden Einheiten zumindest teilweise die Spiroketalstruktur aufweisen, durch Auflösen des Vorläuferpolymerisats in Hexafluorisopropanol erhältlich sind.

3. Polymerisate nach Anspruch 1 oder 2, dadurch gekennzeichnet, daß in diesen Polymerisaten mehr als 90% der aus Kohlenmonoxid stammenden Einheiten, die auf beiden Seiten eine aus einem alpha-Olefin mit mindestens 3 Kohlenstoffatomen im Molekül stammende Einheit tragen, mit den letztgenannten Einheiten auf Kopf-Schwanz-Art verknüpft sind.

4. Verfahren zur Herstellung von Polymerisaten, dadurch gekennzeichnet, daß man ein wie in Anspruch 2 definiertes Vorläuferpolymerisat einer Behandlung unterzieht, bei der Spiroketalstrukturen in Ketonstrukturen umgewandelt werden, wobei diese Behandlung aus dem Erhitzen des Vorläuferpolymerisats oder dem Auflösen des Vorläuferpolymerisats in Hexafluorisopropanol besteht.

5. Verfahren nach Anspruch 4, dadurch gekennzeichnet, daß das Verfahren ein Polymerisationsverfahren zur Herstellung des Vorläuferpolymerisats einschließt, in welchem man die Monomere mit einer Lösung einer Katalysatorzusammensetzung in einem Verdünnungsmittel in Berührung bringt, wobei die Katalysatorzusammensetzung auf

   a) einer Palladiumverbindung,
   b) einem Anion einer Säure mit einem $pK_s$-Wert kleiner 2 und
   c) einem Diphosphin der allgemeinen Formel $R^6R^7P\text{-}R\text{-}PR^8R^9$, worin $R^6$, $R^7$, $R^8$ und $R^9$ gleiche oder verschiedene, gegebenenfalls polar substituierte aliphatische Kohlenwasserstoffgruppen bedeuten und R eine zweiwertige organische Brückengruppe darstellt, die in der Brücke mindestens 2 Kohlenstoffatome enthält, basiert.

6. Verfahren nach Anspruch 5, dadurch gekennzeichnet, daß man das Polymerisationsverfahren bei einer Temperatur im Bereich von 20 bis 100°C, einem Gesamtdruck im Bereich von 5 bis 150 bar, einem Molverhältnis von den Olefinen zu Kohlenmonoxid in der zu polymerisierenden Mischung im Bereich von 10:1 bis 1:10 und unter Verwendung einer solchen Menge an Katalysatorzusammensetzung, die pro Mol zu polymerisierendem Olefin $10^{-7}$ bis $10^{-3}$ Mol Palladium enthält, durchführt.

7. Verfahren nach Anspruch 5 oder 6, dadurch gekennzeichnet, daß man eine Katalysatorzusammensetzung einsetzt, die 0,5 bis 50 Molkomponente b) und 0,5 bis 2 Molkomponente c) pro Mol Palladium enthält.

**8.** Verfahren nach einem oder mehreren der Ansprüche 5-7, dadurch gekennzeichnet, daß man eine Katalysatorzusammensetzung einsetzt, die als Komponente c) ein Diphosphin enthält, in welchem die Gruppen $R^6$,$R^7$, $R^8$ und $R^9$ nicht mehr als jeweils 10 Kohlenstoffatome enthalten.

**9.** Verfahren nach Anspruch 8, dadurch gekennzeichnet, daß man eine Katalysatorzusammensetzung einsetzt, die als Komponente c) ein Diphosphin enthält, in welchem die Gruppen $R^6$, $R^7$, $R^8$ und $R^9$ die gleichen Alkylgruppen sind und die Brückengruppe R drei Atome in der Brücke enthält, von denen mindestens zwei Kohlenstoffatome sind, wie zum Beispiel 1,3-bis(Di-n-butylphosphino)propan.

**10.** Verfahren nach einem oder mehreren der Ansprüche 5-9, dadurch gekennzeichnet, daß man eine Katalysatorzusammensetzung einsetzt, die zusätzlich als Komponente d) ein 1,4-Chinon in einer Menge von 1 bis 5000 Mol pro Mol Palladium enthält.

**Revendications**

**1.** Polymères du monoxyde de carbone avec une ou plusieurs α-oléfines comportant au moins trois atomes de carbone dans leur molécule et éventuellement avec de l'éthène, caractérisé en ce que

a) les polymères possèdent une structure linéaire,
b) dans les polymères, les unités tirant leur origine du monoxyde de carbone d'une part et les unités tirant leur origine des oléfines employées d'autre part se présentent en ordre alternant,
c) dans les polymères, les unités tirant leur origine d'une α-oléfine avec au moins trois atomes de carbone dans la molécule sont attachées à la manière tête/queue à plus de 75% des unités tirant leur origine du monoxyde de carbone et portant de chaque côté une unité tirant son origine d'une α-oléfine avec au moins trois atomes de carbone dans la molécule et
d) les unités tirant leur origine du monoxyde de carbone sont présentes sous la forme d'une structure cétonique.

**2.** Polymères du monoxyde de carbone avec une ou plusieurs α-oléfines comportant au moins trois atomes de carbone dans leur molécule et éventuellement avec l' éthène, caractérisés en ce que

a) les polymères possèdent une structure linéaire,
b) dans les polymères, les unités tirant leur origine du monoxyde de carbone d'une part et les unités tirant leur origine des oléfines utilisées d'autre part se présentent dans un ordre alternant,
c) dans les polymères, les unités tirant leur origine d'une α-oléfine avec au moins trois atomes de carbone dans la molécule sont attachées à la manière tête/queue à plus de 75% des unités tirant leur origine du monoxyde de carbone et portant de chaque côté une unité tirant son origine d'une α-oléfine avec au moins trois atomes de carbone dans la molécule et
d) les polymères peuvent s'obtenir à partir d'un polymère précurseur basé sur les mêmes monomères et possédant les mêmes caractéristiques a), b) et c), dans lequel polymère précurseur, au moins une partie des unités tirant leur origine du monoxyde de carbone possède la structure spirocétalique, par la dissolution du polymère précurseur dans l'hexafluorisopropanol.

**3.** Polymères suivant la revendication 1 ou 2, caractérisés en ce que, dans ces polymères, à plus de 90% des unités tirant leur origine du monoxyde de carbone et portant de chaque côté une unité tirant son origine d'une α-oléfine comportant au moins trois atomes de carbone dans sa molécule, ces dernières unités sont attachées à la manière tête/queue.

**4.** Procédé de préparation de polymères, caractérisé en ce que l'on soumet un polymère précurseur tel que défini dans la revendication 2 à un traitement au cours duquel des structures spirocétaliques sont converties en structures cétoniques, lequel traitement comprend le chauffage du polymère précurseur, ou comprend la dissolution du copolymère précurseur dans l'hexafluorisopropanol.

**5.** Procédé suivant la revendication 4, caractérisé en ce qu'il comprend un processus de polymérisation pour la préparation d'un polymère précurseur, dans lequel processus de polymérisation, les monomères sont mis en contact avec une solution d'une composition catalytique dans un diluant, laquelle composition catalytique est basée sur

a) un composé du palladium,

b) un anion d'un acide qui possède un pKa inférieur à 2 et

c) une diphosphine de la formule générale $R^6R^7P$-R-$PR^8R^9$ dans laquelle $R^6$, $R^7$, $R^8$ et $R^9$ représentent des radicaux hydrocarbyle aliphatiques à substitution polaire éventuelle, identiques ou différents et R représente un groupe de pontage organique bivalent contenant au moins deux atomes de carbone dans le pont.

**6.** Procédé suivant la revendication 5, caractérisé en ce qu'on l'entreprend à une température qui varie de 20 à 100°C, une pression globale qui fluctue de 5 à 150 bars, un rapport molaire des oléfines par rapport au monoxyde de carbone dans le mélange à polymériser qui se situe dans la plage de 10:1 à 1:10 et en utilisant une proportion de composition catalytique telle qu'elle contienne $10^{-7}$ à $10^{-3}$ mole de palladium par mole d'oléfine à polymériser.

**7.** Procédé suivant la revendication 5 ou 6, caractérisé en ce que l'on utilise une composition catalytique qui comprend 0,5 à 50 moles de composant b) et 0,5 à 2 moles de composant c) par mole de palladium.

**8.** Procédé suivant une ou plusieurs des revendications 5 à 7, caractérisé en ce que l'on utilise une composition catalytique qui comprend, à titre de composant c), une diphosphine dans laquelle chacun des groupes $R^6$, $R^7$, $R^8$ et $R^9$ ne contient pas plus de 10 atomes de carbone.

**9.** Procédé suivant la revendication 8, caractérisé en ce que l'on utilise une composition catalytique qui comprend, à titre de composant c), une diphosphine dans laquelle les groupes $R^6$, $R^7$, $R^8$ et $R^9$ sont des radicaux alkyle identiques et où le groupe de pontage R comporte trois atomes dans le pont dont au moins deux sont des atomes de carbone, comme le 1,3-bis(di-n-butylphosphino)propane.

**10.** Procédé suivant une ou plusieurs des revendications 5 à 9, caractérisé en ce que l'on utilise une composition catalytique qui comprend, en outre, une 1,4-quinone à titre de composant d), en une proportion de 1 à 5000 moles par mole de palladium.